(19) Europäisches Patentamt
European Patent Office
Office européen des brevets

(11) Veröffentlichungsnummer: 0 083 434 B2

# (12) NEUE EUROPÄISCHE PATENTSCHRIFT

(45) Veröffentlichungstag der neuen Patentschrift: 03.07.91 Patentblatt 91/27

(51) Int. Cl.$^5$: **C08G 69/00**, C08G 81/02, C08L 77/00, C08L 53/00

(21) Anmeldenummer: 82111765.2

(22) Anmeldetag: 18.12.82

## (54) Elastomere Blockcopolyamide.

(30) Priorität: 02.01.82 DE 3200020

(43) Veröffentlichungstag der Anmeldung: 13.07.83 Patentblatt 83/28

(45) Bekanntmachung des Hinweises auf die Patenterteilung: 15.07.87 Patentblatt 87/29

(45) Bekanntmachung des Hinweises auf die Entscheidung über den Einspruch: 03.07.91 Patentblatt 91/27

(84) Benannte Vertragsstaaten: CH DE FR GB IT LI NL

(56) Entgegenhaltungen:
EP-A- 0 058 329
EP-A- 0 073 838
DE-A- 2 725 664
DE-A- 2 900 880
DE-A- 2 908 298
FR-A- 1 521 223

(73) Patentinhaber: BAYER AG
W-5090 Leverkusen 1 Bayerwerk (DE)

(72) Erfinder: Grigo, Ulrich, Dr.
c/o Mobay Chemical Corporation
New Martinsville W. Va. 26155 (US)
Erfinder: Köhler, Karl-Heinz, Dr.
Buschstrasse 106
W-4150 Krefeld 1 (DE)
Erfinder: Binsack, Rudolf, Dr.
Bethelstrasse 4a
W-4150 Krefeld (DE)
Erfinder: Morbitzer, Leo, Dr.
Rungestrasse 50
W-5000 Köln 80 (DE)
Erfinder: Merten, Josef, Dr.
Kruensend 30
W-4052 Korschenbroich 1 (DE)
Erfinder: Trabert, Ludwig, Dr.
Bodelschwinghstrasse 14
W-4150 Krefeld (DE)
Erfinder: Heitz, Walter, Prof. Dr.
Am Schmidtborn 5
W-3575 Kirchhain (DE)

EP 0 083 434 B2

**Beschreibung für die Vertragsstaaten GB, IT, NL**

## Beschreibung

Gegenstand der Erfindung sind elastomere Blockcopolyamide aus hydrierten linearen Poly-1, 3-dien-Blöcken und Polyamidblöcken.

Polyamide sind für die Herstellung von Fasern und Formkörpern wegen ihrer wertvollen technologischen Eigenschaften, wie z.B. Steifigkeit, Zähigkeit, Spannungsrisskorrosionsbeständigkeit und Lösungsmittelbeständigkeit von Bedeutung.

Für bestimmte Anwendungen jedoch, speziell dort, wo hohe dynamische Belastbarkeit gefordert wird, reichen die elastischen Eigenschaften gemessen als reversible Dehnung und Wechselfestigkeit nicht immer aus.

Es ist bekannt, dass die Elastizität von Polyamiden durch Zugabe von geeigneten Weichmachern verbessert wird. Diese Produkte besitzen jedoch den Nachteil der Migration des Weichmachers und einer relativ geringen Kerbschlagzähigkeit. Das Migrationsproblem des externen Weichmachers lässt sich umgehen, indem man elastomere Weichsegmente in Polyamide einbaut, so dass Blockcopolyamide mit gewissen elastischen Eigenschaften entstehen. Ein geeignetes elastomeres Weichsegment ist z.B. dimere Fettsäure. Polyamide, die Dimer-Fettsäure-Einheiten cokondensiert enthalten, besitzen zwar verbesserte elastische Eigenschaften, bei hohen Dimer-Fettsäure-Anteilen jedoch werden die Copolyamide zum Teil klebrig, so dass Entformungsschwierigkeiten auftreten können. Diese Copolyamide werden daher vor allem als Schmelzkleber eingesetzt (vgl. z.B. DE-OS 2 445 167).

Gute elastische Eigenschaften besitzen Copolyamide, die als Weichsegment Polyetherblöcke, gegebenenfalls in Kombination mit dimerer Fettsäure, enthalten (DE-OS 3 006 961). Diese Produkte sind jedoch aufgrund ihrer Etherkomponenten alterungsempfindlich (s. Ang. Makromol. Chemie 58/591977, 299-319).

Wie in zahlreichen Patenten beschrieben, lassen sich zwar durch Abmischen mit speziell modifizierten Polymeren wie gepfropften Polyacrylaten oder gepfropften Polybutadienen oder modifizierten Polyethylenen Polyamid-Formmassen mit zum Teil ausgezeichneten Zähigkeits-Eigenschaften, jedoch relativ schlechten elastomeren Eigenschaften wie reversibler Dehnung und Wechselknickfestigkeit herstellen.

In überraschender Weise gelang es nun, durch Einbau praktisch gesättigter, ursprünglich polyolefinisch ungesättigter Weichsegmente Copolyamide herzustellen, die sich durch eine sehr gute Elastizität, gemessen als reversible Dehnung und Wechselknickfestigkeit, hohe Kerbschlagzähigkeit und relativ hoher Festigkeit und Wärmeformbeständigkeit auszeichnen.

Gegenstand der vorliegenden Erfindung sind daher Blockcopolyamide hergestellt aus

I. 1-80 Gew.-% hydrierten, telechelen Dienpolymerisaten mit endständigen Carbonatester-, OH–, $-NH_2-$, Carbonsäure- oder Carbonsäureestergruppen und einem Molekulargewicht $M_n$ von 400-6000, vorzugsweise 500-4000, und einem Hydrierungsgrad, bezogen auf den Dien-Anteil im Poly-1, 3-dien, von mindestens 85 Mol-%, vorzugsweise mindestens 95, insbesondere 98 Mol-% und ganz besonders bevorzugt 100 Mol-%, und

II. 99-20 Gew.-%, vorzugsweise 95-35 Gew.-% Polyamid oder Polyamid-bildenden Komponenten,

III. gegebenenfalls üblichen Zuschlagstoffen und

IV. gegebenenfalls 5-70 Gew.-Teilen, bezogen auf 100 Gew.-Teile Zuschlagstoffe und Blockcopolyamid, Füll- und/oder Verstärkungsstoffen.

Die erfindungsgemäss verwendeten hydrierten Polydiene werden durch katalytische Hydrierung von vorzugsweise linearen Verbindungen mit 2 endständigen reaktiven Gruppen der allgemeinen Formel

$$R^1-R-(X)_n-R-R^1$$ erhalten,

in der

X = 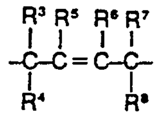 und/oder 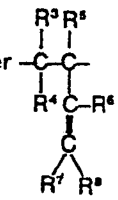

mit

$R^3$ bis $R^8$ = gleich oder verschieden, $C_1$–$C_4$-Alkyl, H, Halogen (vorzugsweise Cl, Br, J);
n = 4 bis 110;
R = eine Einfachbindung oder eine Alkylidengruppe mit $C_1$–$C_3$, wie z.B. $-CH_2-$, $-\underset{CH_3}{CH}-$, $-C(CH_3)_2-$,
$R^1$ = $-COOR^2$, $-OH$, $-CH_2-NH_2$, $-OCOOR^2$ mit
$R^2$ = ein Alkylrest mit 1–10 C-Atomen oder Cycloalkylrest mit 5–10 C-Atomen oder Wasserstoff – ausser bei $-O-CO-OR^2$ – bedeuten.

Die für die Herstellung der hydrierten Polydiene verwendeten Polydiene lassen sich z.B. nach den in der DE-OS 2 900 880 und der DE-OS 2 908 298 beschriebenen Verfahren aus gegebenenfalls substituierten 1,3-Dienen, wie z.B. Butadien, Isopren, Dimethylbutadien und Chloropren und Radikalinitiatoren, wie z.B. Dialkylperoxidicarbonate oder Azodicarbonsäureester vorzugsweise in einer Massepolymerisation herstellen. Aus den dabei erhaltenen Polydienen mit endständigen Carbonatestergruppen können Polydiene mit endständigen Hydroxygruppen durch Hydrolyse oder aus Polydienen mit endständigen Carbonsäureestergruppen durch Reduktion der Estergruppe hergestellt werden.

In den verwendeten Poly-1,3-dienen sind die Dieneinheiten über 1,2- und/oder 1,4-Positionen miteinander verknüpft. Bevorzugt werden Poly-1,3-diene eingesetzt, bei denen mindestens 50 Mol-%, vorzugsweise 70 Mol-%, der Monomereinheiten über 1,4-Bindungen miteinander verknüpft sind.

Die verwendeten Poly-1,3-diene haben ein Molekulargewicht (Zahlenmittel des Molekulargewichtes) Mn von etwa 400-6000, bevorzugt 500 bis 4000, gemessen nach bekannten Methoden wie der Dampfdruckosmose.

Bevorzugte Poly-1,3-diene bestehen aus Einheiten von Butadien, Isopren, Dimethylbutadien und/oder Chloropren und besonders bevorzugt aus Butadien und/oder Isopren.

Die Hydrierung der Poly-1,3-diene wird im allgemeinen unter Druck in Gegenwart von üblichen Hydrierungs-Katalysatoren durchgeführt.

Die Hydrierung der Poly-1,3-diene mit endständigen Carbonatestergruppen, OH-Gruppen, Carbonsäureester oder Carbonsäuregruppen erfolgt z.B. in reinem Wasserstoff an einem Kontakt aus Palladium auf Aktiv-Kohle, wobei nur die Poly-1,3-dien-Kette hydriert wird.

Die Hydrierung der Poly-1,3-diene mit endständigen Nitrilgruppen wird z.B. in einem Wasserstoff/Ammoniak-Gemisch an einem reduzierten Cobalt-Kontakt durchgeführt. Unter diesen Bedingungen wird sowohl die Poly-1,3-dien-Kette als auch die Nitril-Endgruppe hydriert, wobei aus der Nitril- eine Amino-methylen-Gruppe entsteht.

Die Mikrostruktur der Poly-1,3-diene hinsichtlich 1,4/1,2-Verknüpfung der Dien-Einheiten reproduziert sich in den hydrierten Produkten in Form von Tetramethylen-Einheiten bzw. Ethyl-substituierten Ethyleneinheiten. Der Hydrierungsgrad sollte bezogen auf den Dien-Anteil im Poly-1,3-dien mindestens 85 Mol-%, vorzugsweise mindestens 95 Mol-% und besonders bevorzugt 100 Mol-%, betragen.

Die Polyamidkomponente kann aus Lactamen mit 4-12 C-Atomen im Ring oder entsprechende ω-Aminocarbonsäuren, wie z.B. ε-Caprolactam, Undekanlactam, Dodekanlactam, 11-Aminoundekansäure, 12-Aminododekansäure, hergestellt werden.

Die Polyamidkomponente kann auch ein Kondensationsprodukt einer aliphatischen, alicyclischen oder aromatischen Dicarbonsäure mit bis zu 12 C-Atomen wie z.B. Bernstein-, Adipin-, Kork-, Azelain-, Sebacin-, Undekandi-, Dodekandisäure, Terephthalsäure, Isophthalsäure, Cyclohexandicarbonsäure mit einem aliphatischen, alicyclischen oder aromatischen Diamin mit 2 bis 12 C-Atomen wie z.B. Hexamethylendiamin, n- und/oder p-Xylylendiamin ; 2,2,4-Trimethylhexamethylendiamin, Isophorondiamin, Bis-(4-aminocyclohexyl)-methan oder -propan sein.

Von diesen Polyamiden eignen sich besonders Polyamide aus Adipinsäure oder Azelainsäure und Hexamethylendiamin oder Bis-(4-aminocyclohexyl)-methan und/oder ε-Caprolactam und/oder Laurinlactam.

Die erfindungsgemässen Blockpolyamide können durch übliche Kondensation der Polyamidbildenden Ausgangsverbindungen in Gegenwart der telechelen Polymeren gebildet werden.

Dabei hat sich eine stufenweise Umsetzung als besonders vorteilhaft erwiesen, wobei zunächst ein hydriertes Poly-1,3-dien mit endständigen Estergruppen bzw. mit endständigen Hydroxyl- oder Aminogruppen mit einem Überschuss an Diamin bzw. Dicarbonsäure unter Stickstoffatmosphäre bei Temperaturen zwischen 180 und 250°C umgesetzt wird. In einem weiteren Schritt erfolgt dann nach Zugabe weiterer Polyamid-bildender Monomerer die eigentliche Polykondensation bei Temperaturen zwischen 220°C und 310°C. Die Reaktion sollte insgesamt so geführt werden, dass eine möglichst hohe Endviskosität erreicht wird. Um Produkte mit relativ hohem Molekulargewicht zu erreichen, ist es weiterhin zweckmässig, auf ein genaues äquimolares Verhältnis zwischen den jeweiligen miteinander reagierenden Endgruppen zu achten.

Die Kondensation zum erfindungsgemässen elastomeren Copolymeren kann auch so erfolgen, dass zunächst in einer Vorreaktion ein Polyamidblock mit Carboxyl-Endgruppen hergestellt wird, der in einem zweiten Schritt entweder mit einem hydrierten Polydien mit Amino- oder mit –OH– Endgruppen umgesetzt wird. Bei Einsatz des letztgenannten hydrierten Polydiens ist es zweckmässig, die Blockpolymerbildung unter Polyesterbedingungen durchzuführen, d.h. unter Vakuum und gegebenenfalls mit einem Katalysator wie z.B. Titantetraisopropylat. Polyamidblöcke mit Carboxyl-Endgruppen erhält man durch Polykondensation mit einem Überschuss an Dicarbonsäuren, wobei je nach Überschuss die Länge der makromolekularen Kette und demzufolge das mittlere Molekulargewicht zusätzlich variiert werden kann. Blockpolyamide auf der Basis von ε-Caprolactam lassen sich auch aktiviert anionisch polymerisieren.

Die erfindungsgemässen Blockcopolyamide sollen vorzugsweise eine relative Viskosität von etwa 1,6 bis 4,5, vorzugsweise von 2,0 bis 3,5, gemessen in m-Kresol bei 23°C haben.

Die herausragende Eigenschaft der erfindungsgemässen Blockcopolyamide ist im Vergleich zu analogen Copolyamiden mit Weichsegmenten aus Poly-tetrahydrofuran oder Dimerfettsäure die vorteilhafte Kombination von guter Elastizität und Kerbschlagzähigkeit mit hoher Festigkeit und Wärmeformbeständigkeit.

Die gute Elastizität macht sich einerseits in einer hohen reversiblen Dehnung und andererseits in einer hohen Wechselknickfestigkeit bemerkbar. Die reversible Dehnung wird aus einem entsprechend angelegten Zugversuch nach DIN 53 455 bestimmt. Hierbei wird der Prüfkörper bei entsprechender Belastung um einen bestimmten Betrag gedehnt. Nach Beendigung der Belastung wird die verbleibende Restdehnung gemessen. Die Differenz aus Dehnung bei Belastung und nach Entlastung ist die reversible Dehnung. Dementsprechend folgt für die relative reversible Dehnung :

$$\begin{matrix}\text{relative}\\\text{reversible}\\\text{Dehnung}\end{matrix} = \frac{\text{Dehnung bei Belastung} - \text{Dehnung nach Entlastung}}{\text{Dehnung bei Belastung}} \cdot 100$$

Je höher die reversible Dehnung ist, um so eher kann daher ein deformierter Körper seine ursprüngliche Form wieder einnehmen.

Die Wechselknickfestigkeit wird in Anlehnung an DIN 53 359 bestimmt. Sie wird durch die Zahl der Hübe bis zum Bruch angegeben.

Die Kombination von ausgezeichneter Elastizität und Kerbschlagzähigkeit mit relativ hoher Festigkeit und Steifigkeit ermöglicht, die erfindungsgemässen Blockcopolyamide insbesondere zur Herstellung von stoss- bzw. deformationsbelasteten Formteilen, wie z.B. Stossfänger, Dämpfungselemente, zu verwenden.

Daneben weisen die erfindungsgemässen Blockcopolyamide eine hervorragende Verarbeitungs- und Alterungsstabilität auf.

Die erfindungsgemässen Blockcopolyamide können in der üblichen Weise modifiziert werden. Sie können daher z.B. Verstärkungs- und Füllstoffe, insbesondere Glasfasern, Flammschutzmittel, Stabilisatoren, Nucleier-, Gleit- und Formtrennmittel sowie Farbstoffe und Pigmente enthalten.

Die Verstärkungs- und Füllstoffe, die zur Erhöhung der Steifigkeit und der Festigkeit dienen, werden in üblichen Mengen von 5 bis 70 Gew.-Teilen, bezogen auf 100 Gew.-Tle. Additiv und Blockcopolyamid, verwendet. Als solche kommen beispielsweise in Frage :

Glasfasern, Glaskugeln, Kaolin, Quarz, Glimmer, Wollastonit, Talkum, Asbest, Titandioxid, Aluminiumoxid, Microvit, Kreide oder calciniertes Aluminiumsilikat. Bevorzugt sind Glasfasern.

Beispiele

I) Herstellung der Poly-1,3-diene

a) Poly-1,3-diendicarbonsäuredimethylester und Poly-1,3-diendiisobutyronitril

Die Herstellung der Poly-1,3-diendicarbonsäuredimethylester wurde nach den in der DE-OS 2 900 880

und DE-OS 3 105 365 beschriebenen Verfahren durchgeführt, wobei als Initiator für die Dien-Polymerisation ein Azo-bis-isobuttersäuremethylester genommen wurde. Die Poly-1,3-dien-isobutyrolnitrile werden analog hergestellt, wobei als Initiator Azo-bis-isobuttersäurenitril eingesetzt wird.

b) Poly-1,3-diene mit Carbonatester- und OH-Endgruppen

Die Poly-1,3-diene mit Carbonatesterendgruppen werden analog Ia) hergestellt. Als Initiatoren dienen Dialkylperoxidicarbonate. Die Carbonat-Endgruppen werden durch alkalische Verseifung in Hydroxylgruppen überführt.

II) Hydrierung der Poly-1,3-diene

a) Poly-1,3-diene mit Carbonsäuremethylester-, Carbonatester- und OH-Endgruppen (« Kettenhydrierung »).

In einem Stahlautoklaven werden 1 Tl. Poly-1,3-dien, 4 Tle. Tetrahydrofuran (THF) bzw. Cyclohexan und 0,03 Tle. (5%-iges) Palladium auf Aktiv-Kohle unter Rühren gut vermischt und anschliessend 2-3 Stunden bei einer Temperatur von 50°C und einem Wasserstoff-Druck von 50 bar hydriert. Der Hydrier-Verlauf lässt sich über die Druckabnahme verfolgen.

b) Poly-1,3-diene mit Nitril-Endgruppen (« Kettenund Endgruppen-Hydrierung »)

In einem Stahlautoklaven werden 1 Tl. Poly-1,3-dien, und ggf. 3 Tle. Cyclohexan oder THF, 0,2 Tle. alkalifreier reduzierter Cobalt-Kontakt, 1 Tl. Ammoniak unter Rühren gut vermischt. Anschliessend wird Wasserstoff aufgedrückt und bei Temperaturen von 125-150°C und einem Gesamtdruck von ca. 250 bar 12 bis 18 Stunden hydriert. Der Hydrierverlauf lässt sich über die Druckabnahme verfolgen. Die Endgruppenhydrierung erfolgt schneller als die Kettenhydrierung.

III) Aufarbeitung der hydrierten Poly-1,3-diene

Die nach IIa) und b) erhaltenen Lösungen von hydrierten Poly-1,3-dienen in THF oder Cyclohexan werden heiss vom Katalysator abfiltriert. Der Katalysatorrückstand wird gut mit heissem Lösungsmittel ausgewaschen. Bei stark gefärbten Lösungen ist es empfehlenswert, ein zweites Mal in Gegenwart von Kieselgel heiss zu filtrieren. Die erhaltene Lösung wird bei 70°C im Wasserstrahlvakuum eingeengt und anschliessend 4-6 Stunden im Ölpumpenvakuum (≤ 3 mbar) von restlichem Lösungsmittel befreit. Man erhält eine weisse, hochviskose bis wachsartige Substanz (je nach Hydrierungsgrad). Der Hydrierungsgrad lässt sich NMR-spektroskopisch und durch Iod-Zahl-Bestimmungen ermitteln.

Herstellung der elastomeren Blockcopolyamide

In einem Reaktions-Gefäss mit Metall-Rührer und Destillations-Aufsatz werden die in Tabelle 1 jeweils aufgeführten Reaktionskomponenten unter den genannten Bedingungen kondensiert. Es entsteht im allgemeinen eine leicht trübe, hochviskose Schmelze. Die Schmelze wird abgekühlt, granuliert und im Falle von PA-6-Copolyamiden zur Entfernung des nicht umgesetzten Caprolactams 4 Stunden mit heissem Wasser extrahiert.

Vom Granulat wurden auf einer üblichen Spritzgussmaschine bei 260°C Normkleinstäbe, Flachstäbe und Zugstäbe verspritzt.

Geprüft wurde an den Normkleinstäben die Kerbschlagzähigkeit (nach DIN 53 453) und Biegefestigkeit (nach DIN 53 452), an den Flachstäben die Wechselknickfestigkeit (in Anlehnung an DIN 53 359) und an den Zugstäben die relative reversible Dehnung (in Anlehnung an DIN 53 455).

Die Zusammensetzung und die Eigenschaften der Blockcopolyamide sind der Tabelle 2 zu entnehmen.

Tabelle 1: Einwaagen und Herstellabedingungen für die Beispiele 1 bis 14

| Beispiel | Weichsegment Typ | Endgruppen | g (Mol) | Adipinsäure A/ Hexamethylendiamin (Mol) | H | Caprolactam g (Mol) | Aminocapronsäure g (Mol) |
|---|---|---|---|---|---|---|---|
| 1* | Poly-tetrahydrofuran | OH | 100 (0,1) | 14,6 (0,1) | A | 364 (3,2) | 41,7 (0,32) |
| 2* | Empol 1010®[2] | COOH | 100 (0,17) | 20,2 (0,17) | H | 364 (3,2) | 41,7 (0,32) |
| 3* | Empol 1010®[2] | COOH | 200 (0,34) | 40,5 (0,34) | H | 273 (2,4) | 31,3 (0,24) |
| 5 | hydr. Poly-1,3-butadien | $NH_2$ | 50 (0,039) | 5,6 (0,039) | A | 410 (3,6) | 47 (0,36) |
| 6 | hydr. Poly-1,3-butadien | $NH_2$ | 100 (0,077) | 11,2 (0,077) | A | 364 (3,2) | 42 (0,32) |
| 7 | hydr. Poly-1,3-butadien | $NH_2$ | 200 (0,154) | 22,5 (0,154) | A | 273 (2,4) | 31,3 (0,24) |
| 8 | hydr. Poly-1,3-butadien | $NH_2$ | 250 (0,192) | 28,1 (0,192) | A | 228 (2,0) | 26,1 (0,2) |
| 11 | hydr. Poly-1,3-butadien | Methylester | 50 (0,018) | 2,6 (0,018) | H | 410 (3,6) | 47 (0,36) |
| 12 | hydr. Poly-1,3-butadien | Methylester | 150 (0,054) | 7,8 (0,0) | H | 315 (2,8) | 37 (0,28) |
| 13 | hydr. Poly-1,3-butadien | OH | 100 (0,030) | 4,3 (0,030) | A | 364 (3,2) | 42 (0,32) |
| | | | | | | AH-Salz[1] | Überschuss an Hexamethylendiamin |
| 4* | Empol 1010®[2] | COOH | 100 (0,17) | 20.2 (0,17) | H | 463,6 (1,8) | 10,3 g ≙5% |
| 10 | hydr. Poly-1,3-butadien | $NH_2$ | 100 (0,077) | 11,2 (0,077) | A | 463,6 (1,8) | 10,3 g ≙5% |

* Vergleichsbeispiel
[1] 1:1 Salz aus Adipinsäure und Hexamethylendiamin
[2] Dimerfettsäure der Fa. Unilever

Tabelle 1: Einwaagen und Herstellbedingungen für die Beispiele 1 bis 14 (Fortsetzung)

| Beispiel | Sonstiges | Herstellbedingungen Normaldruck/$N_2$ | Vakuum |
|---|---|---|---|
| 1 | 250 mg Titantetraisopropylat | 1 h 270°C, 3 h 270°C | 2 h 270°C, 1 Torr |
| 2 | – | 1 h 220°C, 6 h 270°C | – |
| 3 | – | 1 h 220°C, 6 h 270°C | – |
| 5 | – | 1 h 220°C, 3 h 270°C | – |
| 6 | – | 1 h 220°C, 3 h 270°C | – |
| 7 | – | 1 h 220°C, 3 h 270°C | – |
| 8 | – | 1 h 220°C, 3 h 270°C | – |
| 11 | – | 1 h 220°C, 3 h 270°C | – |
| 12 | – | 1 h 220°C, 3 h 270°C | – |
| 13 | – | 1 h 220°C, 3 h 270°C | 2 h 270°C, 3 Torr |
| 4 | – | 15 min 270°C, 3 h 290°C | – |
| 10 | – | 30 min 270°C, 2,5 h 290°C | – |

Tabelle 2: Zusammensetzung und Eigenschaften der elastomeren Blockcopolyamide

| Bsp. | Zusammensetzung Polyamid Typ | Gew.-% | hydr. Poly-1,3-dien Endgruppe | Mn | Gew.-% | andere Weichsegm. Typ | Gew.-% | Eigenschaften δ b B MPa[4] | ε rev. %[5] | $a_k$ (RT) kJ/m²[6] | Wechselknick-festigkeit n[7] | Vicat B °C |
|---|---|---|---|---|---|---|---|---|---|---|---|---|
| 1* | PA-6 | 80 | – | 1000 | – | Poly-THF[8] | 20 | 60 | 32 | 8 | 72.000 | 124 |
| 2* | PA-6 | 80 | – | 574 | – | Empol®[2] 1010 | 20 | 68 | 36 | 7 | 40.000 | 128 |
| 3* | PA-6 | 60 | – | 574 | – | 1010 | 40 | 34 | 51 | 42 | 57.000 | 37 |
| 4* | PA-66 | 80 | – | 574 | – | 1010 | 20 | 73 | 26 | 5 | 11.000 | 134 |
| 5 | PA-6 | 90 | $NH_2$ | 1300 | 10 | – | – | 95 | 26 | 16 | 68.000 | 175 |
| 6 | PA-6 | 80 | $NH_2$ | 1300 | 20 | – | – | 70 | 40 | 23 | 100.000 | 150 |
| 7 | PA-6 | 60 | $NH_2$ | 1300 | 40 | – | – | 29 | 55 | n. gebr. | 100.000 | 61 |
| 8 | PA-6 | 50 | $NH_2$ | 1300 | 50 | – | – | 12 | 62 | n. gebr. | 100.000 | 37 |
| 10 | PA-66 | 80 | $NH_2$ | 1300 | 20 | – | – | 74 | 32 | 11 | 28.000 | 162 |
| 11 | PA-6 | 90 | Methylester | 2800 | 10 | – | – | 96 | 25 | 17 | 73.000 | 172 |
| 12 | PA-6 | 70 | Methylester | 2800 | 30 | – | – | 58 | 47 | 51 | 100.000 | 90 |
| 13 | PA-6 | 80 | –OH | 3400 | 20 | – | – | 79 | 24 | 5 | 80.000 | 146 |

[4] Biegefestigkeit (DIN 53 452)
[5] Reversible Dehnung, gemessen nach einer Dehnung um 100%
[6] Kerbschlagzähigkeit (DIN 53 453)
[7] n = Zahl der Hübe bis zum Bruch
[8] Poly–THF mit aliphat. OH-Endgruppen, Mn ca. 1000 (Dampfdruckosmose, Benzol)
[2] Dimerfettsäure der Fa. Unilever
* Vergleichsbeispiele

**Beschreibung für die Vertragsstaaten CH, DE, FR, LI.**

Gegenstand der Erfindung sind elastomere Blockcopolyamide aus hydrierten linearen Poly-1,3-dien-Blöcken und Polyamidblöcken.

Polyamide sind für die Herstellung von Fasern und Formkörpern wegen ihrer wertvollen technologischen Eigenschaften, wie z.B. Steifigkeit, Zähigkeit, Spannungsrisskorrosionsbeständigkeit und Lösungsmittelbeständigkeit von Bedeutung.

Für bestimmte Anwendungen jedoch, speziell dort, wo hohe dynamische Belastbarkeit gefordert wird, reichen die elastischen Eigenschaften gemessen als reversible Dehnung und Wechselknickfestigkeit nicht immer aus.

Es ist bekannt, dass die Elastizität von Poylamiden durch Zugabe von geeigneten Weichmachern verbessert wird. Diese Produkte besitzen jedoch den Nachteil der Migration des Weichmachers und einer relativ geringen Kerbschlagzähigkeit. Das Migrationsproblem des externen Weichmachers lässt sich umgehen, indem man elastomere Weichsegmente in Polyamide einbaut, so dass Blockcopolyamide mit gewissen elastischen Eigenschaften entstehen. Ein geeignetes elastomeres Weichsegment ist z.B. dimere Fettsäure. Polyamide, die Dimer-Fettsäure-Einheiten cokondensiert enthalten, besitzen zwar verbesserte elastische Eigenschaften, bei hohen Dimer-Fettsäure-Anteilen jedoch werden die Copolyamide zum Teil klebrig, so dass Entformungsschwierigkeiten auftreten können. Diese Copolyamide werden daher vor allem als Schmelzkleber eingesetzt (vgl. z.B. DE-OS 2 445 167).

Gute elastische Eigenschaften besitzen Copolyamide, die als Weichsegment Polyetherblöcke, gegebenenfalls in Kombination mit dimerer Fettsäure, enthalten (DE-OS 3 006 961). Diese Produkte sind jedoch aufgrund ihrer Etherkomponenten alterungsempfindlich (s. Ang. Makromol. Chemie 58/59 1977, 299-319).

Wie in zahlreichen Patenten beschrieben, lassen sich zwar durch Abmischen mit speziell modifizierten Polymeren wie gepfropften Polyacrylaten oder gepfropften Polybutadienen oder modifizierten Polyethylenen Polyamid-Formmassen mit zum Teil ausgezeichneten Zähigkeits-Eigenschaften, jedoch relativ schlechten elastomeren Eigenschaften wie reversibler Dehnung und Wechselknickfestigkeit herstellen.

In überraschender Weise gelang es nun, durch Einbau praktisch Besättigter, ursprünglich polyolefinisch ungesättigter Weichsegmente Copolyamide herzustellen, die sich durch eine sehr gute Elastizität, gemessen als reversible Dehnung und Wechselknickfestigkeit, hohe Kerbschlagzähigkeit und relativ hoher Festigkeit und Wärmeformbeständigkeit auszeichnen.

Gegenstand der vorliegenden Erfindung sind daher Blockcopolyamide hergestellt aus

I. 1-80 Gew.-%, vorzugsweise 5-65 Gew.-% hydrierten, telechelen Dienpolymerisaten mit endständigen Carbonatester-, OH– oder Carbonsäureestergruppen und einem Molekulargewicht Mn von 400-6000, vorzugsweise 500-4000, und einem Hydrierungsgrad, bezogen auf den Dien-Anteil im Poly-1,3-dien, von mindestens 85 Mol-%, vorzugsweise mindestens 95, insbesondere 98 Mol-% und ganz besonders bevorzugt 100 Mol-%, und

II. 99-20 Gew.-%, vorzugsweise 95-35 Gew.-% Polyamid oder Polyamid-bildenden Komponenten,

III. gegebenenfalls üblichen Zuschlagstoffen und

IV. gegebenenfalls 5-70 Gew.-Teilen, bezogen auf 100 Gew.-Teile Zuschlagstoffe und Blockcopolyamid, Füll- und/oder Verstärkungsstoffen.

Die erfindungsgemäss verwendeten hydrierten Polydiene werden durch katalytische Hydrierung von vorzugsweise linearen Verbindungen mit 2 endständigen reaktiven Gruppen der allgemeinen Formel

$R^1-R-(X)_n-R-R^1$ erhalten,

in der

X = 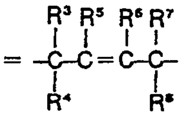 und/oder 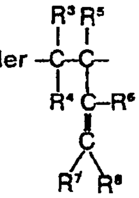

mit

$R^3$ bis $R^8$ = gleich oder verschieden, $C_1$–$C_4$-Alkyl, H, Halogen (vorzugsweise Cl, Br, J);

n = 4 bis 110;

R = eine Einfachbindung oder eine Alkylidengruppe mit $C_1$–$C_3$, wie z. B. $-CH_2-$, $-\underset{CH_3}{CH}-$, $-C(CH_3)_2-$,

$R^1$ = $-COOR^2$, $-OH$, $-OCOOR^2$ mit

$R^2$ = ein Alkylrest mit 1–10 C-Atomen oder Cycloalkylrest mit 5–10 C-Atomen oder Wasserstoff – ausser bei $-O-CO-OR^2$ – bedeuten.

Die für die Herstellung der hydrierten Polydiene verwendeten Polydiene lassen sich z.B. nach den in der DE-OS 2 900 880 und der DE-OS 2 908 298 beschriebenen Verfahren aus gegebenenfalls substituierten 1,3-Dienen, wie z.B. Butadien, Isopren, Dimethylbutadien und Chloropren und Radikalinitiatoren, wie z.B. Dialkylperoxidicarbonate oder Azodicarbonsäureester vorzugsweise in einer Massepolymerisation herstellen. Aus den dabei erhaltenen Polydienen mit endständigen Carbonatestergruppen können Polydiene mit endständigen Hydroxygruppen durch Hydrolyse oder aus Polydienen mit endständigen Carbonsäureestergruppen durch Reduktion der Estergruppe hergestellt werden.

In den verwendeten Poly-1,3-dienen sind die Dieneinheiten über 1,2- und/oder 1,4-Positionen miteinander verknüpft. Bevorzugt werden Poly-1,3-diene eingesetzt, bei denen mindestens 50 Mol-%, vorzugsweise 70 Mol-%, der Monomereinheiten über 1,4-Bindungen miteinander verknüpft sind.

Die verwendeten Poly-1,3-diene haben ein Molekulargewicht (Zahlenmittel des Molekulargewichtes) Mn von etwa 400-6000, bevorzugt 500 bis 4000, gemessen nach bekannten Methoden wie der Dampfdruckosmose.

Bevorzugte Poly-1,3-diene bestehen aus Einheiten von Butadien, Isopren, Dimethylbutadien und/oder Chloropren und besonders bevorzugt aus Butadien und/oder Isopren.

Die Hydrierung der Poly-1,3-diene wird im allgemeinen unter Druck in Gegenwart von üblichen Hydrierungs-Katalysatoren durchgeführt.

Die Hydrierung der Poly-1,3-diene mit endständigen Carbonatestergruppen, OH-Gruppen, Carbonsäureester oder Carbonsäuregruppen erfolgt z.B. in reinem Wasserstoff an einem Kontakt aus Palladium auf Aktiv-Kohle, wobei nur die Poly-1,3-dien-Kette hydriert wird.

Die Mikrostruktur der Poly-1,3-diene hinsichtlich 1,4/1,2-Verknüpfung der Dien-Einheiten reproduziert sich in den hydrierten Produkten in Form von Thetramethylen-Einheiten bzw. Ethyl-substituierten Ethyleneinheiten. Der Hydrierungsgrad sollte bezogen auf den Dien-Anteil im Poly-1,3-dien mindestens 85 Mol-%, vorzugsweise mindestens 95 Mol-% und besonders bevorzugt 100 Mol-%, betragen.

Die Polyamidkomponente kann aus Lactamen mit 4-12 C-Atomen im Ring oder entsprechenden ω-Aminocarbonsäuren, wie z.B. ε-Caprolactam, Undekanlactam, Dodekanlactam, 11-Aminoundekansäure, 12-Aminododekansäure, hergestellt werden.

Die Polyamidkomponente kann auch ein Kondensationsprodukt einer aliphatischen, alicyclischen oder aromatischen Dicarbonsäure mit bis zu 12 C-Atomen wie z.B. Bernstein-, Adipin-, Kork-, Azelain-, Sebacin-, Undekandi-, Dodekandisäure, Terephthalsäure, Isophthalsäure, Cyclohexandicarbonsäure mit einem aliphatischen, alicyclischen oder aromatischen Diamin mit 2 bis 12 C-Atomen wie z.B. Hexamethylendiamin, n- und/oder p-Xylylendiamin ; 2,2,4-Trimethylhexamethylendiamin, Isphorondiamin, Bis-(4-aminocyclohexyl)-methan oder -propan sein.

Von diesen Polyamiden eignen sich besonders Polyamide aus Adipinsäure oder Azelainsäure und Hexamethylendiamin oder Bis-(4-aminocyclohexyl)-methan und/oder ε-Caprolactam und/oder Laurinlactam.

Die erfindungsgemässen Blockcopolyamide können durch übliche Kondensation der Polyamid-bildenden Ausgangsverbindungen in Gegenwart der telechelen Polymeren gebildet werden.

Dabei hat sich eine stufenweise Umsetzung als besonders vorteilhaft erwiesen, wobei zunächst ein hydriertes Poly-1,3-dien mit endständigen Estergruppen bzw. mit endständigen Hydroxylgruppen mit einem Überschuss an Diamin bzw. Dicarbonsäure unter Stickstoffatmosphäre bei Temperaturen zwischen 180 und 250°C umgesetzt wird. In einem weiteren Schritt erfolgt dann nach Zugabe weiterer Polyamid-bildender Monomerer die eigentliche Polykondensation bei Temperaturen zwischen 220°C und 310°C. Die Reaktion sollte insgesamt so geführt werden, dass eine möglichst hohe Endviskosität erreicht wird. Um Produkte mit relativ hohem Molekulargewicht zu erreichen, ist es weiterhin zweckmässig, auf ein genaues äquimolares Verhältnis zwischen den jeweiligen miteinander reagierenden Endgruppen zu achten.

Die Kondensation zum erfindungsgemässen elastomeren Copolymeren kann auch so erfolgen, dass zunächst in einer Vorreaktion ein Polyamidblock mit Carboxyl-Endgruppen hergestellt wird, der in einem zweiten Schritt entweder mit einem hydrierten Polydien mit OH-Endgruppen umgesetzt wird. Bei Einsatz des letztgenannten hydrierten Polydiens ist es zweckmässig, die Blockpolymerbildung unter Polyesterbedingungen durchzuführen, d.h. unter Vakuum und gegebenenfalls mit einem Katalysator wie z.B. Titantetraisopropylat. Polyamidblöcke mit Carboxyl-Endgruppen erhält man durch Polykondensation mit einem Überschuss an Dicarbonsäuren, wobei je nach Überschuss die Länge der makromolekularen Kette und demzufolge das mittlere Molekulargewicht zusätzlich variiert werden kann. Blockcopolyamide auf der Basis von ε-Caprolactam lassen sich auch aktiviert anionisch polymerisieren.

Die erfindungsgemässen Blockcopolyamide sollen vorzugsweise eine relative Viskosität von etwa 1,6 bis 4,5, vorzugsweise von 2,0 bis 3,5, gemessen in m-Kresol bei 23°C haben.

Die herausragende Eigenschaft der erfindungsgemässen Blockcopolyamide ist im Vergleich zu analogen Copolyamiden mit Weichsegmenten aus Poly-tetrahydrofuran oder Dimerfettsäure die vorteilhafte Kombination von guter Elastizität und Kerbschlagzähigkeit mit hoher Festigkeit und Wärmeformbeständigkeit.

Die gute Elastizität macht sich einerseits in einer hohen reversiblen Dehnung und andererseits in einer hohen Wechselknickfestigkeit bemerkbar. Die reversible Dehnung wird aus einem entsprechend angelegten Zugversuch nach DIN 53 455 bestimmt. Hierbei wird der Prüfkörper bei entsprechender Belastung um einen bestimmten Betrag gedehnt. Nach Beendigung der Belastung wird die verbleibende Restdehnung gemessen. Die Differenz aus Dehnung bei Belastung und nach Entlastung ist die reversible Dehnung. Dementsprechend folgt für die relative reversible Dehnung :

$$\text{relative reversible Dehnung} = \frac{\text{Dehnung bei Belastung} - \text{Dehnung nach Entlastung}}{\text{Dehnung bei Belastung}} \cdot 100$$

Je höher die reversible Dehnung ist, um so eher kann daher ein deformierter Körper seine ursprüngliche Form wieder einnehmen.

Die Wechselknickfestigkeit wird in Anlehnung an DIN 53 359 bestimmt. Sie wird durch die Zahl der Hübe bis zum Bruch angegeben.

Die Kombination von ausgezeichneter Elastizität und Kerbschlagzähigkeit mit relativ hoher Festigkeit und Steifigkeit ermöglicht, die erfindungsgemässen Blockcopolyamide insbesondere zur Herstellung von stoss- bzw. deformationsbelasteten Formteilen, wie z.B. Stossfänger, Dämpfungselemente, zu verwenden.

Daneben weisen die erfindungsgemässen Blockcopolyamide eine hervorragende Verarbeitungs- und Alterungsstabilität auf.

Die erfindungsgemässen Blockcopolyamide können in der üblichen Weise modifiziert werden. Sie können daher z.B. Verstärkungs- und Füllstoffe, insbesondere Glasfasern, Flammschutzmittel, Stabilisatoren, Nucleier-, Gleit- und Formtrennmittel sowie Farbstoffe und Pigmente enthalten.

Die Verstärkungs- und Füllstoffe, die zur Erhöhung der Steifigkeit und der Festigkeit dienen, werden in üblichen Mengen von 5 bis 70 Gew.-Teilen, bezogen auf 100 Gew.-Tle. Additiv und Blockcopolyamid, verwendet. Als solche kommen beispielsweise in Frage : Glasfasern, Glaskugeln, Kaolin, Quarz, Glimmer, Wollastonit, Talkum, Asbest, Titandioxid, Aluminiumoxid, Microvit, Kreide oder calciniertes Aluminiumsilikat. Bevorzugt sind Glasfasern.

## Beispiele

I) Herstellung der Poly-1,3-diene

a) Poly-1,3-diendicarbonsäuredimethylester

Die Herstellung der Poly-1,3-diendicarbonsäuredimethylester wurde nach den in der DE-OS 2 900 880 und DE-OS 3 105 365 beschriebenen Verfahren durchgeführt, wobei als Initiator für die Dien-Polymerisation ein Azo-bis-isobuttersäuremethylester genommen wurde.

b) Poly-1,3-diene mit Carbonatester- und OH- Endgruppen

Die Poly-1,3-diene mit Carbonatesterendgruppen werden analog Ia) hergestellt. Als Initiatoren dienen Dia-

lkylperoxidicarbonate. Die Carbonat-Endgruppen werden durch alkalische Verseifung in Hydroxylgruppen überführt.

II) Hydrierung der Poly-1,3-diene

a) Poly-1,3-diene mit Carbonsäuremethylester-, Carbonatester- und OH-Endgruppen (« Kettenhydrierung »).

In einem Stahlautoklaven werden 1 Tl. Poly-1,3-dien, 4 Tle. Tetrahydrofuran (THF) bzw. Cyclohexan und 0,03 Tle. (5%iges) Palladium auf Aktiv-Kohle unter Rühren gut vermischt und anschliessend 2-3 Stunden bei einer Temperatur von 50°C und einem Wasserstoff-Druck von 50 bar hydriert. Der Hydrier-Verlauf lässt sich über die Druckabnahme verfolgen.

III) Aufarbeitung der hydrierten Poly-1,3-diene

Die nach IIa) erhaltene Lösung von hydriertem Poly-1,3-dien in THF wird heiss vom Katalysator abfiltriert. Der Katalysatorrückstand wird gut mit heissem Lösungsmittel ausgewaschen. Bei stark gefärbten Lösungen ist es empfehlenswert, ein zweites Mal in Gegenwart von Kieselgel heiss zu filtrieren. Die erhaltene Lösung wird bei 70°C im Wasserstrahlvakuum eingeengt und anschliessend 4-6 Stunden im Ölpumpenvakuum (≤ 3 mbar) von restlichem Lösungsmittel befreit. Man erhält eine weisse, hochviskose bis wachsartige Substanz (je nach Hydrierungsgrad). Der Hydrierungsgrad lässt sich NMR-spektroskopisch und durch Iod-Zahl-Bestimmungen ermitteln.

Herstellung der elastomeren Blockcopolyamide

In einem Reaktions-Gefäss mit Metall-Rührer und Destillations-Aufsatz werden die in Tabelle 1 jeweils aufgeführten Reaktionskomponenten unter den genannten Bedingungen kondensiert. Es entsteht im allgemeinen eine leicht trübe, hochviskose Schmelze. Die Schmelze wird abgekühlt, granuliert und im Falle von PA-6-Copolyamiden zur Entfernung des nicht umgesetzten Caprolactams 4 Stunden mit heissem Wasser extrahiert.

Vom Granulat wurden auf einer üblichen Spritzgussmaschine bei 260°C Normkleinstäbe, Flachstäbe und Zugstäbe verspritzt.

Geprüft wurde an den Normalkleinstäben die Kerbschlagzähigkeit (nach DIN 53 453) und Biegefestigkeit (nach DIN 53 452), an den Flachstäben die Wechselknickfestigkeit (in Anlehnung an DIN 53 359) und an den Zugstäben die relative reversible Dehnung (in Anlehnung an DIN 53 455).

Die Zusammensetzung und die Eigenschaften der Blockcopolyamide sind der Tabelle 2 zu entnehmen.

Tabelle 1: Einwaagen und Herstellbedingungen für die Beispiele 1 bis 7

| Beispiel | Weichsegment Typ | Endgruppen | g (Mol) | Adipinsäure A/ Hexamethylendiamin (Mol) | H | Caprolactam g (Mol) | Aminocapronsäure g (Mol) |
|---|---|---|---|---|---|---|---|
| 1* | Poly-tetrahydrofuran | OH | 100 (0,1) | 14,6 (0,1) | A | 364 (3,2) | 41,7 (0,32) |
| 2* | Empol 1010®[2] | COOH | 100 (0,17) | 20,2 (0,17) | H | 364 (3,2) | 41,7 (0,32) |
| 3* | Empol 1010®[2] | COOH | 200 (0,34) | 40,5 (0,34) | H | 273 (2,4) | 31,3 (0,24) |
| 5 | hydr. Poly-1,3-butadien | Methylester | 50 (0,018) | 2,6 (0,018) | H | 410 (3,6) | 47 (0,36) |
| 6 | hydr. Poly-1,3-butadien | Methylester | 150 (0,054) | 7,8 (0,0) | H | 315 (2,8) | 37 (0,28) |
| 7 | hydr. Poly-1,3-butadien | OH | 100 (0,030) | 4,3 (0,030) | A | 364 (3,2) AH-Salz[1] | 42 (0,32) Überschuss an Hexamethylendiamin |
| 4* | Empol 1010®[2] | COOH | 100 (0,17) | 20,2 (0,17) | H | 463,6 (1,8) | 10,3 g ≙5% |

* Vergleichsbeispiel

[1] 1:1 Salz aus Adipinsäure und Hexamethylendiamin

[2] dimerfettsäure der Fa. Unilever

Tabelle 1: Einwaagen und Herstellbedingungen für die Beispiele 1 bis 7 (Fortsetzung)

| Beispiel | Sonstiges | Herstellbedingungen Normaldruck/$N_2$ | Vakuum |
|---|---|---|---|
| 1 | 250 mg Titantetraisopropylat | 1 h 270°C, 3 h 270°C | 2 h 270°C, 1 Torr |
| 2 | – | 1 h 220°C, 6 h 270°C | – |
| 3 | – | 1 h 220°C, 6 h 270°C | – |
| 5 | – | 1 h 220°C, 3 h 270°C | – |
| 6 | – | 1 h 220°C, 3 h 270°C | – |
| 7 | – | 1 h 220°C, 3 h 270°C | 2 h 270°C, 3 Torr |
| 4 | – | 15 min 270°C, 3 h 290°C | – |

Tabelle 2: Zusammensetzung und Eigenschaften der elastomeren Blockcopolyamide

| Bsp. | Zusammensetzung Polyamid Typ | Gew.-% | hydr. Poly-1,3-dien Endgruppe | Mn | Gew.-% | andere Weichsegm. Typ | Gew.-% | Eigenschaften δ b B MPa[4] | ε rev. %[5] | $a_k$ (RT) kJ/m²[6] | Wechselknick-festigkeit n[7] | Vicat B °C |
|---|---|---|---|---|---|---|---|---|---|---|---|---|
| 1* | PA-6 | 80 | – | 1000 | – | Poly-THF[8] | 20 | 60 | 32 | 8 | 72.000 | 124 |
| 2* | PA-6 | 80 | – | 574 | – | Empol®[2] 1010 | 20 | 68 | 36 | 7 | 40.000 | 128 |
| 3* | PA-6 | 60 | – | 574 | – | 1010 | 40 | 34 | 51 | 42 | 57.000 | 37 |
| 4* | PA-66 | 80 | – | 574 | – | 1010 | 20 | 73 | 26 | 5 | 11.000 | 134 |
| 5 | PA-6 | 90 | Methylester | 2800 | 10 | – | – | 96 | 25 | 17 | 73.000 | 172 |
| 6 | PA-6 | 70 | Methylester | 2800 | 30 | – | – | 58 | 47 | 51 | 100.000 | 90 |
| 7 | PA-6 | 80 | –OH | 3400 | 20 | – | – | 79 | 24 | 5 | 80.000 | 146 |

[4] Biegefestigkeit (DIN 53 452)
[5] Reversible Dehnung, gemessen nach einer Dehnung um 100%
[6] Kerbschlagzähigkeit (DIN 53 453)
[7] n = Zahl der Hübe bis zum Bruch
[8] Poly–THF mit aliphat. OH-Endgruppen, Mn ca. 1000 (Dampfdruckosmose, Benzol)
[2] Dimerfettsäure der Fa. Unilever
* Vergleichsbeispiele

## Ansprüche

### Patentansprüche für die Vertragsstaaten GB, IT, NL

1. Elastomere Blockcopolyamide hergestellt aus
I. 1-80 Gew.-% hydrierten, telechelen Dienpolymerisaten mit endständigen Carbonatester-, OH–, $-NH_2-$, Carbonsäure- oder Carbonsäureestergruppen und einem Molekulargewicht Mn von etwa 400-6000 und einem Hydrierungsgrad, bezogen auf den Dien-Anteil, von mindestens 85 Mol-%,
II. 99-20 Gew.-% Polyamiden oder Polyamidbildenden Komponenten,
III. gegebenenfalls üblichen Zuschlagstoffen und
IV. gegebenenfalls 5-70 Gew.-Teilen, bezogen auf 100 Gew.-Teile Zuschlagstoffe und Blockcopolyamid, Füll- und/oder Verstärkungsstoffen.

2. Elastomere Blockcopolyamide nach Anspruch 1, dadurch gekennzeichnet, dass sie aus 5-65 Gew.-% der Komponente I und 95-35 Gew.-% der Komponente II hergestellt wurden.

3. Blockcopolymere nach Anspruch 1 oder 2, dadurch gekennzeichnet, dass das Molekulargewicht Mn der Komponente I etwa 500-4000 beträgt.

4. Blockcopolymere nach Anspruch 1, dadurch gekennzeichnet, dass der Hydrierungsgrad mindestens 98 Mol-% beträgt.

5. Blockcopolymere nach Anspruch 1, dadurch gekennzeichnet, dass der Hydrierungsgrad 100 Mol-% beträgt.

6. Blockcopolymere nach Ansprüchen 1-5, dadurch gekennzeichnet, dass sich die Komponente I von Carbonatester-, –OH–, $-NH_2-$, Carbonsäure- oder Carbonsäureester-Endgruppen tragenden Poly-Butadien, Isopren, Dimethylbutadien oder Chloropren ableitet.

7. Blockcopolymere nach Ansprüchen 1-6, dadurch gekennzeichnet, dass sich die Komponente II von Lactamen mit 4-12 C-Atomen im Ring oder entsprechenden ω-Aminocarbonsäuren oder von aliphat., alicyclischen oder aromatischen Dicarbonsäuren mit bis zu 12 C-Atomen und aliphatischen, alicyclischen oder aromatischen Dicarbonsäuren mit 2-12 C-Atomen ableitet.

8. Blockcopolyamide nach Anspruch 7, dadurch gekennzeichnet, dass sich die Komponente II von ε-Caprolactam ableitet.

9. Verfahren zur Herstellung von Blockcopolyamiden nach Ansprüchen 1-8, dadurch gekennzeichnet, dass die Komponente II in Gegenwart der telechelen Polymeren I polykondensiert wird.

### Patentansprüche für die Vertragsstaaten CH, DE, FR, LI

1. Elastomere Blockcopolyamide hergestellt aus
I. 1-80 Gew.-% hydrierten, telechelen Dienpolymerisaten mit endständigen Carbonatester-, oder Carbonsäureestergruppen und einem Molekulargewicht Mn von 400-6000 und einem Hydrierungsgrad, bezogen auf den Dien-Anteil, von mindestens 85 Mol-%,
II. 99-20 Gew.-%% Polyamiden oder Polyamidbildenden Komponenten,
III. gegebenenfalls üblichen Zuschlagstoffen und
IV. gegebenenfalls 5-70 Gew.-Teilen, bezogen auf 100 Gew.-Teile Zuschlagstoffe und Blockcopolyamid, Füll- und/oder Verstärkungsstoffen.

2. Elastomere Blockcopolyamide nach Anspruch 1, dadurch gekennzeichnet, dass sie aus 5-65 Gew.-% der Komponente I und 95-35 Gew.-% der Komponente II hergestellt wurden.

3. Blockcopolymere nach Anspruch 1 oder 2, dadurch gekennzeichnet, dass das Molekulargewicht Mn der Komponete I etwa 500-4000 beträgt.

4. Blochcopolymere nach Anspruch 1, dadurch gekennzeichnet, dass der Hydrierungsgrad mindestens 98 Mol-% beträgt.

5. Blockcopolymere nach Anspruch 1, dadurch gekennzeichnet, dass der Hydrierungsgrad 100 Mol-% beträgt.

6. Blockcopolymere nach Ansprüchen 1-5, dadurch gekennzeichnet, dass sich die Komponente I von Carbonatester-, oder Carbonsäureester-Endgruppen tragenden Poly-Butadien, Isopren, Dimethylbutadien oder Chloropren ableitet.

7. Blockcopolymere nach Ansprüchen 1-6, dadurch gekennzeichnet, dass sich die Komponente II von Lactamen mit 4-12 C-Atomen im Ring oder entsprechenden ω-Aminocarbonsäuren oder von aliphat., alicyclischen oder aromatischen Dicarbonsäuren mit bis zu 12 C-Atomen und aliphatischen, alicyclischen oder aromatischen

Dicarbonsäuren mit 2-12 C-Atomen ableitet.

8. Blockcopolyamide nach Anspruch 7, dadurch gekennzeichnet, dass sich die Komponente II von ε-Caprolactam ableitet.

9. Verfahren zur Herstellung von Blockcopolyamiden nach Ansprüchen 1-8, dadurch gekennzeichnet, dass die Kompnnente II in Gegenwart der telechelen Polymeren I polykondensiert wird.

## Claims

### Claims for the contracting States : GB, IT, NL

1. Elastomeric block copolyamides produced from
I. 1-80% by weight of hydrogenated telechelic diene polymers containing terminal carbonate ester, OH, $-NH_2$, carboxylic acid or carboxylic acid ester groups and having a molecular weight Mn of about 400-6000 and a degree of hydrogenation, based on the diene content, of at least 85 mol%,
II. 99-20% by weight of polyamides or polyamide-forming components,
III. optionally standard additives and
IV. optionally 5-70 parts by weight, based on 100 parts by weight of additives and block copolyamide, of fillers and/or reinforcing materials.

2. Elastomeric block copolyamides according to Claim 1, characterised in that they have been produced from 5-65% by weight of component I and 95-35% by weight of component II.

3. Block copolymers according to Claim 1 or 2, characterised in that the molecular weight Mn of component I is about 500-4000.

4. Block copolymers according to Claim 1, characterised in that the degree of hydrogenation is at least 98 mol%.

5. Block copolymers according to Claim 1, characterised in that the degree of hydrogenation is 100 mol%.

6. Block copolymers according to Claims 1-5, characterised in that component I is derived from polybutadiene, isoprene, dimethylbutadiene or chloroprene carrying carbonate ester, $-OH$, $-NH_2$, carboxylic acid or carboxylic acid ester end groups.

7. Block copolymers according to Claims 1-6, characterised in that component II is derived from lactams with 4-12 C atoms in the ring or corresponding ω-aminocarboxylic acids or from aliphatic, alicyclic or aromatic dicarboxylic acids with up to 12 C atoms and aliphatic, alicyclic or aromatic dicarboxylic acids with 2-12 C atoms.

8. Block copolyamides according to Claim 7, characterised in that component II is derived from ε-caprolactam.

9. Process for the production of block copolyamides according to Claims 1-8, characterised in that component II is polycondensed in the presence of the telechelic polymers I.

### Claims for the contracting States : CH, DE, FR, LI

1. Elastomeric block copolyamides produced from
I. 1-80% by weight of hydrogenated telechelic diene polymers containing terminal carbonate ester or carboxylic acid ester groups and having a molecular weight Mn of 400-6000 and a degree of hydrogenation, based on the diene content, of at least 85 mol%,
II. 99-20% by weight of polyamides or polyamide-forming components,
III. optionally standard additives and
IV. optionally 5-70 parts by weight, based on 100 parts by weight of additives and block copolyamide, of fillers and/or reinforcing materials.

2. Elastomeric block copolyamides according to Claim 1, characterised in that they have been produced from 5-65% by weight of component I and 95-35% by weight of component II.

3. Block copolymers according to Claim 1 or 2, characterised in that the molecular weight Mn of component I is about 500-4000.

4. Block copolymers according to Claim 1, characterised in that the degree of hydrogenation is at least 98 mol%.

5. Block copolymers according to Claim 1, characterised in that the degree of hydrogenation is 100 mol%.

6. Block copolymers according to Claims 1-5, characterised in that component I is derived from polybutadiene, isoprene, dimethylbutadiene or chloroprene carrying carbonate ester or carboxylic acid ester end groups.

7. Block copolymers according to Claims 1-6, characterised in that component II is derived from lactams

with 4-12 C atoms in the ring or corresponding ω-aminocarboxylic acids or from aliphatic, alicyclic or aromatic dicarboxylic acids with up to 12 C atoms and aliphatic, alicyclic or aromatic dicarboxylic acids with 2-12 C atoms.

8. Block copolyamides according to Claim 7, characterised in that component II is derived from ε-caprolactam.

9. Process for the production of block copolyamides according to Claims 1-8, characterised in that component II is polycondensed in the presence of the telechelic polymers I.

**Revendications pour les Etats contractants : GB, IT, NL**

1. Copolyamides séquencés élastomères produits à partir

I. de 1 à 80% en poids de polymères diéniques hydrogénés portant des groupes ester carbonique, –OH–, $-NH_2-$, acide carboxylique ou ester d'acide carboxylique terminaux et ayant un poids moléculaire $M_n$ d'environ 400 à 6000 et

II. de 99 à 20% en poids de polyamides ou de composants formant des polyamides,

III. le cas échéant, d'additifs classiques et

IV. le cas échéant, de 5 à 70 parties en poids, pour 100 parties en poids d'additifs et de copolyamide séquencé, de charges et/ou de substances d'égalisation.

2. Copolyamides séquencés élastomères suivant la revendication 1, caractérisés en ce qu'ils ont été préparés à partir de 5 à 65% en poids du composant I et de 95 à 35% en poids du composant II.

3. Copolymères séquencés suivant la revendication 1 ou 2, caractérisés en ce que le poids moléculaire $M_n$ du composant I s'élève à environ 500-4000.

4. Copolymères séquencés suivant les revendications 1-3, caractérisés en ce que le composant I présente un degré d'hydrogénation, par rapport à la fraction diénique, d'au moins 85 moles%.

5. Copolymères séquencés suivant la revendication 1, caractérisés en ce que le degré d'hydrogénation s'élève à 100 moles%.

6. Copolymères séquencés suivant les revendications 1-5, caractérisés en ce que le composant I est dérivé d'un polymère de butadiène, d'isoprène, de diméthylbutadiène ou de chloroprène portant des groupes terminaux ester carbonique, –OH–, $-NH_2$, acide carboxylique ou ester d'acide carboxylique.

7. Copolymères séquencés suivant les revendications 1 à 6, caractérisés en ce que le composant II est dérivé de lactames ayant 4 à 12 atomes de carbone dans le noyau ou d'acides ω-aminocarboxyliques correspondants ou d'acides dicarboxyliques aliphatiques, alicycliques ou aromatiques ayant jusqu'à 12 atomes de carbone et d'acides dicarboxyliques aliphatiques, alicycliques ou aromatiques ayant 2 à 12 atomes de carbone.

8. Copolyamides séquencés suivant la revendication 7, caractérisés en ce que le composant II est dérivé de l'ε-caprolactame.

9. Procédé de production de copolyamides séquencés suivant les revendications 1 à 8, caractérisé en ce que le composant II est polycondensé en présence des polymères I.

**Revendications**

**Revendications pour les Etats contractants : CH, DE, FR, LI**

1. Copolyamides séquencés élastomères, préparés à partir

I. de 1 à 80% en poids de polymères diéniques hydrogénés portant des groupes ester carbonique ou ester d'acide carboxylique terminaux et ayant un poids moléculaire $M_n$ de 400 à 6000 et un degré d'hydrogénation, par rapport à la portion diénique, d'au moins 85 moles%.

II. de 99 à 20% en poids de polyamides ou de composants formant des polyamides,

III. le cas échéant, d'additifs classiques et

IV. le cas échéant, de 5 à 70 parties en poids, pour 100 parties en poids d'additifs et de copolyamide séquencé, de charges et/ou de matières de renforcement.

2. Copolyamides séquencés élastomères suivant la revendication 1, caractérisés en ce qu'ils ont été préparés à partir de 5 à 65% en poids du composant I et de 95 à 35% en poids du composant II.

3. Copolymères séquencés suivant la revendication 1 ou 2, caractérisés en ce que le poids moléculaire $M_n$ du composant I s'élève à environ 500-4000.

4. Copolymères séquencés suivant la revendication 1, caractérisés en ce que le degré d'hydrogénation s'élève au moins à 98 moles%.

5. Copolymères séquencés suivant la revendication 1, caractérisés en ce que le degré d'hydrogénation s'élève à 100 moles%.

6. Copolymères séquencés suivant les revendications 1 à 5, caractérisés en ce que le composant I est dérivé d'un polymère de butadiène, d'isopréne, de diméthylbutadiène ou de chloroprène portant des groupes terminaux ester carbonique ou ester d'acide carboxylique.

7. Copolymères séquencés suivant les revendications 1 à 6, caractérisés en ce que le composant II est dérivé de lactames ayant 4 à 12 atomes de carbone dans le noyau ou d'acide ω-aminocarboxyliques correspondants ou d'acides dicarboxyliques aliphatiques, alicycliques ou aromatiques ayant jusqu'à 12 atomes de carbone et d'acides dicarboxyliques aliphatiques, alicycliques ou aromatiques ayant 2 à 12 atomes de carbone.

8. Copolyamides séquencés suivant la revendication 7, caractérisés en ce que le composant II est dérivé de l'ε-caprolactame.

9. Procédé de production de copolyamides séquencés suivant les revendications 1 à 8, caractérisé en ce que le composant II est polycondensé en présence des polymères I.